# EUROPEAN PATENT SPECIFICATION

(11) **EP 0 471 748 B1**
(45) Date of publication and mention of the grant of the patent: **27.07.1994**
(21) Application number: 90907612.7
(22) Date of filing: 04.05.1990
(51) Int. Cl.: B62J 11/00, B62H 5/00

(54) **BICYCLE ACCESSORY FOR CARRYING A SHACKLE**
FAHRRADZUBEHÖR FÜR DIE AUFNAHME EINES ANTIDIEBSTAHLKABELS
ACCESSOIRE DE BICYCLETTE PORTANT UN CABLE ANTIVOL

(30) Priority: 08.05.1989 US 349401
(43) Date of publication of application: 26.02.1992
(73) Proprietor: GILLES, Vincent B, Boulder, CA 80302 (US)
(72) Inventor: GILLES, Vincent B, Boulder, CA 80302 (US)
(74) Representative: Williams, John Francis
(86) International application number: PCT/US90/02500
(87) International publication number: WO 90/13469

(56) References cited:
- CH-A- 238 079
- US-A- 3 848 783
- US-A- 3 910 602
- US-A- 4 404 822

## Description

### Technical Field

The present invention generally relates to an accessory for a bicycle or similar vehicle and, more particularly, to a carrier accessory for holding a coiled shackle, with or without a padlock, on a bicycle.

### Background Art

During the past two to three decades great interest has arisen in bicycles as a means of non-polluting transportation and as a source of recreation and exercise. Concomitant with that interest, substantial strides have been made in the engineering and manufacturing of bicycles. As a result, high quality and lightweight multi-speed recreational and racing bicycles, rugged trail bicycles, and the like are now quite popular and widely owned. In turn, the cost of these types of bicycles has increased. In another spectrum, many youths have bicycles as their primary source of recreation and transportation, and as their most expensive possession. However, owners of bicycles run a great risk of loss due to bicycle theft if their bicycles are left unattended or unsecured. Therefore most bicycles, when unattended, are secured to a bicycle stand, post, tree, or other fixed object with locks; and with flexible shackles, such as chains and security cables which are secured with padlocks; and with various other locking devices.

Because of its light weight, compactness, and resistance to tampering and cutting, the cable, and especially the helical coiled cable, combined with a padlock, has enjoyed great popularity with the bicycling public for use in securing a bicycle against theft. However, once purchased, the best method for carrying such a chain or cable while the bicycle is being ridden is left to the imagination of the rider. Many riders attach the ends of their chains or cables to the underside of their bicycle seat, or wrap the shackle around the post under the bicycle seat, or around the bicycle frame. Other riders wrap the chain or cable on the handlebars of their bicycles, or carry them separately in a bag or on their person. These methods of carrying a shackle and padlock are either time consuming or awkward, and may pose a potential hazard to the rider or cause damage to the bicycle.

In U.S. Patents 3,756,008 and 3,886,770 to Smith, there is described a bracket component which is directly connected to and under the bicycle seat, which bracket component is designed to hold a padlock whose shackle in turn supports a self-coiling wire cable. When the padlock and self-coiling wire cable are positioned on the bracket and the bicycle is ridden, the coil is free to move, thereby potentially interfering with the operation of the bicycle or causing damage to the bicycle due to the fact that usually only the ends of the shackle are secured. As a result, the body of the shackle is free to move in such a manner as to potentially interfere with the operation of the bicycle. Also, over time, the wire cable may lose its memory and shape, and stretch in a manner which may cause interference.

In U.S. Patent 3,848,783 there is described a bracket mounted to a tubular frame member of the bicycle having a detent latching means for attaching it to the frame member and a cross member having pleat-like folds at its outboard ends to hold the flexible cable or chain in a coil-like manner.

### Disclosure of Invention

In view of the foregoing, it is an object of the present invention to provide a carrier accessory for securing a coiled shackle, with or without a padlock, to a bicycle.

It is another object to provide such a carrier accessory which is both lightweight and quick and efficient to place a coiled shackle on and from which to remove a coiled shackle.

Another object is to provide such a carrier accessory which will secure the coiled shackle and any padlock against movement, thereby eliminating the potential for the cable to interfere with the use or operation of the bicycle or to damage the bicycle.

The foregoing objects of the present invention are obtained by providing new features in a coiled shackle carrier accessory having a means, such as a clamp, for attaching the carrier accessory to a bicycle or the like, and means for carrying a coiled shackle, said carrying means being connected and carried by said attaching means.

These new features include a first elongated arm with an upper surface adapted to receive and support the coiled shackle. These new features also include means for releasably securing the coiled shackle to the upper surface of the first elongated arm being also connected to and carried by the attaching means and including a second elongated arm extending substantially along, but spaced from, the first elongated arm to form therewith a clip adapted to receive and secure the coiled shackle between the first and second elongated arms.

These new features further include means for releasably clamping the first and second elongated arms toward one another to secure the coiled shackle therebetween. The clamping means is a hinged lid attached to the distal end of one of the elongated arms. A portion of the hinged lid and a portion of the distal end of the other elongated arm form a locking arrangement.

When the hinged lid is unlocked and moved to an open position the coiled shackle may be inserted between, or removed from between, the elongated arms of the carrier accessory. When a coiled shackle is inserted between the elongated arms of the carrier accessory, the elongated arms may then be locked together by the lid to form a closed, and normally tightened, carrier accessory for the coiled shackle, with or without a padlock. When the hinged lid is placed in a closed position and locked, with appropriately selected dimensions the coiled shackle, and any associated padlock, are squeezed between the elongated arms and thereby secured against movement.

These new features still further include means for blocking inadvertent removal of the coiled shackle from between the first and second elongated arms. The means for blocking inadvertent removal of the coiled shackle is a projection which is carried by the first elongated arm and extends upwardly for a distance sufficient to substantially block inadvertent removal of the coiled shackle from the first elongated arm.

It is therefore seen that the present invention discloses and provides a carrier accessory for securing a shackle, such as a helical coiled security cable, with or without a padlock, to a bicycle. The carrier accessory is simultaneously lightweight, quick and efficient to operate, yet capable of carrying and securing the coiled shackle, with or without a padlock.

### Brief Description of Drawings

Fig. 1 is a side elevational view of a portion of a bicycle showing a carrier accessory of the present invention mounted on a seat post of the bicycle and carrying a coiled shackle and padlock.

Fig. 2 is an enlarged side elevational view of the carrier accessory mounted on a portion of the seat post of the bicycle, with a hinged lid of the carrier accessory in a closed and locked position.

Fig. 3 is an exploded fragmentary front perspective view of the carrier accessory with the padlock and the coils of the shackle shown broken away.

Fig. 4 is a fragmentary front perspective view of the carrier accessory showing the hinged lid in an engaged position, and with a coiled shackle secured on the carrier accessory.

Fig. 5 is a fragmentary front perspective view of the carrier accessory showing the hinged lid in a disengaged position, and with a coiled shackle loosely held by the carrier accessory.

Fig. 6 is a is a fragmentary side elevational view of the carrier assembly with the hinged lid in a fully opened and stable raised position with a coiled shackle being placed upon or being removed from the carrier accessory.

Fig. 7 is a top plan view of the carrier accessory.

Fig. 8 is an elevational view of the hinged lid taken along line 8--8 of Fig. 6.

### Best Mode for Carrying Out the Invention

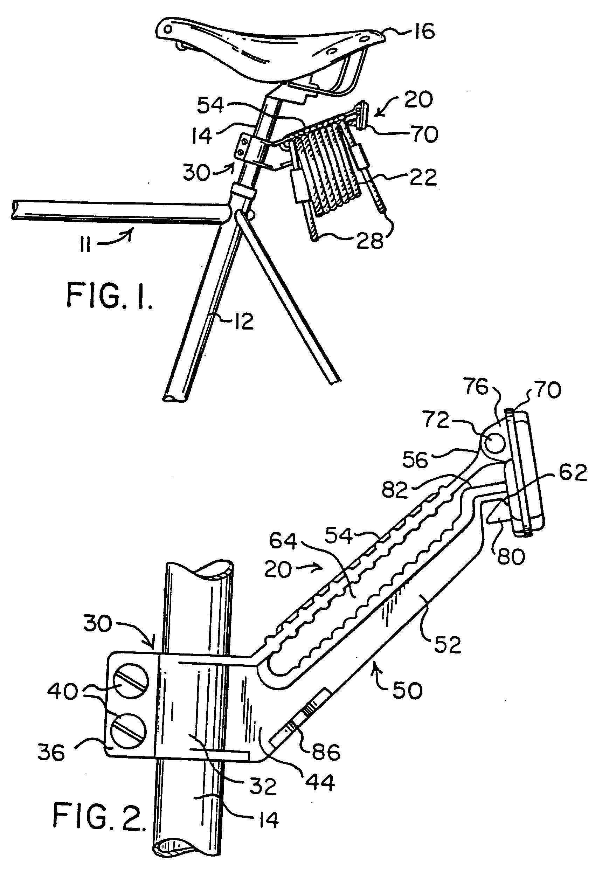

Referring to FIG. 1, a portion of a bicycle 11 is shown having a frame 12 with a seat post 14 secured to the frame 12 and a seat 16 mounted on seat post 14. As shown in FIGS. 1 and 2, a cable carrier accessory 20 of the present invention is mounted on the seat post 14 so as to extend towards the rear of the bicycle.

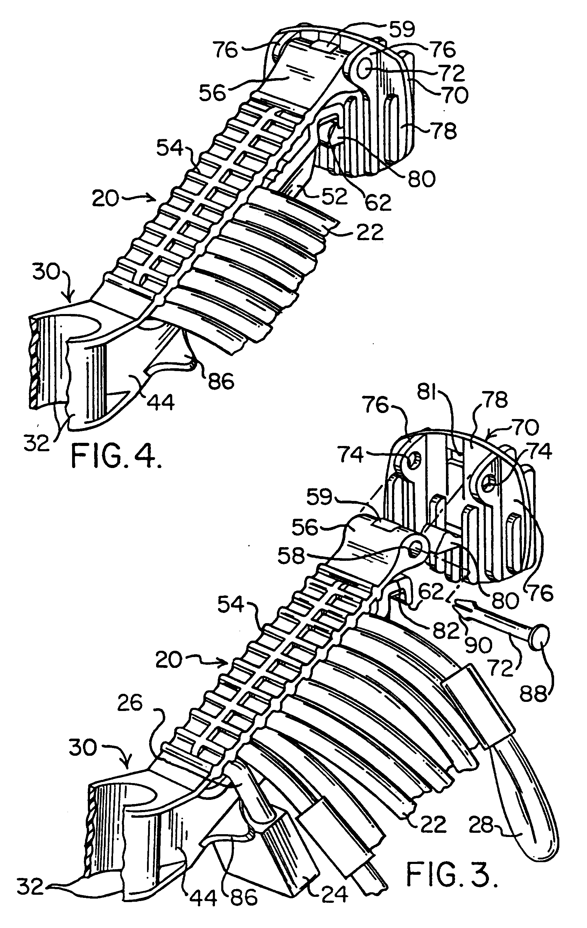

In FIGS. 3 through 5, the carrier accessory 20 is illustrated in various modes of use with a coiled shackle 22 and a padlock 24 including a shackle portion 26 carried thereby. The illustrated shackle 22 is a helical coiled cable, but other types of coilable shackles may be carried in an improved manner by the carrier accessory 20 of the present invention. Shackle 22, as illustrated in FIG. 3, includes eyelets 28 at the opposite ends thereof for receiving padlock 24 therethrough when shackle 22 is used to secure a bicycle frame 12 to a stationary object, such as a bicycle stand, post, tree, or the like.

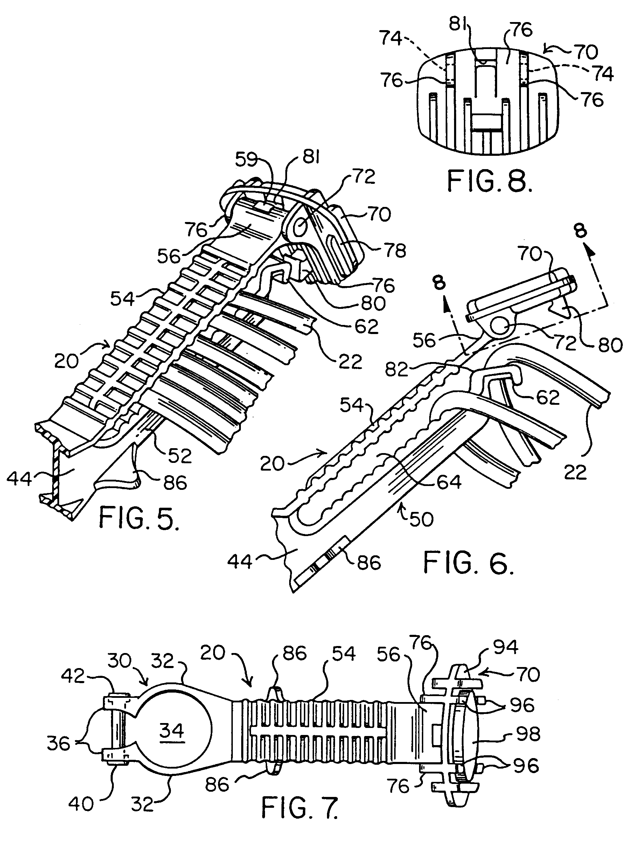

Referring to FIGS. 2 and 7, the accessory carrier 20 includes a post clamp 30 as one mechanism for attaching the carrier accessory 20 to cylindrical seat post 14. Clamp 30 includes two expandable semi-circular arms 32 defining an annular substantially circular opening 34, as shown in FIG. 7. Circular opening 34 is shaped and designed to receive cylindrical post 14, or some other cylindrical portion of bicycle frame 12 therein. Extended portions 36 of semi-circular arms 32 include apertures, not visible, for receiving threaded bolts 40 therethrough. Each bolt 40 is secured by nut 42, as shown in FIG. 7, which nuts 42 allow the tightening or loosening of clamp 30. For example, with nuts 42 loosened and removed, bolts 40 can then be removed, thereby allowing semi-circular arms 32 to be spread apart and expanded to allow post 14 or some other portion of bicycle frame 12 to be received within opening 34. Bolts 40 can then be inserted through the apertures in the extended portions 36 of semi-circular arms 32, connected to nuts 42, and tightened, thus securing the carrier accessory 20 to the seat post 14, or to some other portion of bicycle frame 12. Removal of carrier accessory 20 can be accomplished by reversing these steps.

As shown in FIGS. 2 and 6, carrier accessory 20 also includes a web portion 40 which extends to the left of clamp 30 and a clip 50 connected to and extending from the right of the web portion 40 and angling upwardly when the accessory 20 is attached to seat post 14. Clip 50 includes a lower elongated arm 52 which is designed to receive the coiled shackle 22 on its upper surface and an upper elongated arm 54 extending generally parallel to the lower elongated arm 52. The upper arm 54 terminates in an outer or distal end 56, opposed to clamp 30, and having an aperture 58 defined therethrough, as shown in FIG. 3. The lower elongated arm 52 is disposed in a parallel spaced relationship from upper elongated arm 54 to define a space 64 between them which is dimensioned to receive the coils of the shackle 22 therein. Web portion 44 and lower and upper elongated arms 52, 54 forming clip 50 together with clamp 30 are preferably in the form of an integrally-connected one-piece structure.

Preferably, lower and upper elongated arms 52, 54 extend outwardly in cantilevered fashion from clamp 30 via web portion 44. The upper elongated arm 54 can flex toward and away from lower elongated arm 52. Such flexing permits increase of the height of space 64 between them for facilitating insertion or removal of shackle 22. Referring to FIG. 3, it will be noted that the outer or distal end of upper elongated arm 54 includes a node or protrusion 59, while the lower elongated arm 52 has a discontinuity at its outer or distal end which defines a shoulder or keeper 62. As illustrated, it is clear that the clip 50 is angled upwardly so that the coils of the shackle 22 can be easily gravity-fed into space 64 of carrier accessory 20.

As shown in FIGS. 1 through 8, a locking lid 70 is hingedly attached to the outer end 56 of upper arm 54 using a hinge pin 72. The pin 72 is received through apertures 74 defined in a pair of mounting brackets 76 which are, in turn, attached to a back side 78 of lid 70. Also carried by the back side 78 of lid 70 is a clasp or hook or finger 80 used for releasable locking engagement with shoulder 62 carried by lower elongated arm 52. Shoulder 62 and finger 80 are so dimensioned and designed that they snap into latching or locking engagement when the lid 70 is forced to rotate downward into a closed and locked position as shown in FIGS. 2 and 4.

Referring to FIG. 3, it will be noted that the back side 78 of the hinged lid 70 also has a recess 81. When hinged lid 70 is in its fully up position, as illustrated in FIG. 6, node 59 makes a releasable snap fit connection with recess 81, thereby positioning and retaining hinged lid 70 in a stable open position until the user urges it downwardly, out of that position, for example, to close the carrier accessory 20. When lid 70 is not fully open, node 59 rides against the back side 78 of lid 70, much as a cam would guide a cam follower, to thereby urge lid 70 into a somewhat tensioned and stable position along its arc of motion.

Referring to FIGS. 2, 3 and 6, a trap or stop 82 is formed integral with and extends upwardly from the upper surface of lower elongated arm 52 adjacent its distal end. Should lid 70 be inadvertently left open after a coiled shackle 22 is placed into space 64, as depicted in FIGS. 5 and 6, and the bicycle be ridden with lid 70 unlatched, trap 82 will help to prevent shackle 22 from inadvertently bouncing out of carrier accessory 20 and becoming lost. Trap 82 also serves to isolate shackle 22 from upper elongated arm 54, thereby preventing the shackle 22 from interfering with the closure of hinged lid 70. It should be added that, when inserting the coils of the shackle 22 on and around the lower elongated arm 52 of clip 50, upper elongated arm 54 is sufficiently flexible that it may be raised slightly, thereby allowing the coils of the shackle 22 to pass over the top of trap 82 so that they may be easily received in space 64.

As illustrated in FIGS. 2 through 7, a pair of outwardly extending ears 86 are attached to opposite sides of lower elongated arm 52. As shown in FIG. 3, when shackle portion 26 of padlock 24 is received at the lower end of space 64, between lower and upper elongated arms 52, 54, a portion of padlock shackle 26 rests against ears 86. Ears 86 fix the position of padlock shackle 26, and thus of padlock 24 on the carrier accessory 20 so that padlock 24 is kept away from bicycle frame 12, thereby preventing possible contact of padlock 24 with the frame. Even in the absence of padlock 24, it will be appreciated, for example by reference to FIG. 1, that, by design, carrier accessory 20 carries shackle 22 and any padlock 24 upwardly and rearwardly from seat post 14, or any other portion of frame 12 which substantially eliminates any chance of their interfering with the operation of the bicycle.

FIG. 3 illustrates carrier accessory 20 with hinged lid 70 positioned for attachment to outer or distal end 56 of the upper elongated arm 54 of clip 50. During attachment of lid 70, aperture 58 through distal end 56 of upper elongated arm 54 is received between the mounting brackets 76 on back side 78 of lid 70, and hinge pin 72 is inserted through the apertures 74 and 58. This results in lid 70 being rotatably connected to the distal end 56 of upper elongated arm 54. Pin 72 has an enlarged head 88 at one end and a split at the other end which defines a pair of compressible lips 90. Lips 90 can be compressed when inserting them through apertures 74 and 58, and then allowed to expand outward when insertion is completed. In this manner, the pin 72 is secured in place and lid 70 is pivotally secured to distal end 56 of upper elongated arm 54.

FIG. 4 shows carrier accessory 20 with hinged lid 70 closed and locked or latched by the action of finger 80 against shoulder 62, and with the coils of shackle 22 secured between lower and upper elongated arms 52, 54. The space 64 between the elongated arms 52, 54 is such that when a shackle of standard diameter is placed in the space 64, and hinged lid 70 is closed and latched, as shown in FIG. 4, shackle 22 is actually squeezed by elongated arms 52, 54, thereby immobilizing the shackle 22 and securing it in place. While not shown, this will normally cause some slight bowing of the portion of upper elongated arm 54 which is adjacent to distal end 56.

FIG. 5 shows finger 80 of hinged lid 70 just released from shoulder 62, and the coils of shackle 22 released from compression between elongated arms 52, 54. FIG. 6 illustrates hinged lid 70 in a completely raised and open position with a portion of the coils of shackle 22 being either removed from or placed into space 64 of clip 50.

FIG. 7 illustrates the carrier accessory 20 with bolt 40 and nut 42 secured to the post clamp 30. Also, at a front side 94 of the hinged lid 70 is carried a plurality of stand-off fingers 96 for receiving a light reflector 98 therebetween. When lid 70 is in a closed position, as shown in FIGS. 1, 2 and 4, reflector 98 is in a substantially vertical position for reflecting light directed and received at the rear of bicycle 11. Light reflector 98 provides an added safety feature to carrier accessory 20 for the operator of the bicycle 11 during nighttime riding conditions. FIG. 8 illustrates the structure and relationship of apertures 74 carried by mounting brackets 76 to the recess 81.

While carrier accessory 20 is shown, for example in FIGS. 1 and 2, attached to seat post 14 of the bicycle frame 12, it should be kept in mind that carrier accessory 20 can serve its function of carrying a coiled shackle equally well when attached to other portions of a bicycle, or on equivalent types of equipment or vehicles requiring the use of a security shackle. As previously noted, carrier accessory 20 is adapted for holding either the coils of any flexible shackle, including chains or cables, and also various lock structures, such as padlocks, either separately or in combination. Carrier accessory 20 may be made of a variety of materials, including but not limited to thermoplastic materials. If produced of thermoplastic, the carrier accessory is designed so that it may be easily injection molded for mass production.

## Claims

1. A carrier accessory (20) for securing a coiled shackle (22) to a bicycle (11) and having means (30) for attaching the carrier accessory (20) to the bicycle (11) and means for carrying a coiled shackle (22), said carrying means being connected to and carried by said attaching means (30), the carrier accessory (20) being characterized by:
a first elongated arm (52) with an upper surface adapted to receive and support the coiled shackle (22); and
means for releasably securing the coiled shackle (22) to said upper surface of said first elongated arm (52), said securing means being connected to and carried by said attaching means (30) and including a second elongated arm (54) extending substantially along, but spaced from, said first elongated arm (52) to form therewith a clip (50) adapted to receive and secure the coiled shackle (22) between said first and second elongated arms (52, 54).

2. The carrier accessory (20) of claim 1 wherein said attaching means (30) is a clamp, said clip (50) extending outwardly from said clamp (30) in a cantilevered fashion, said clip (50) and clamp (30) forming an integrally-connected one-piece structure.

3. The carrier accessory (20) of claim 1 wherein said first and second elongated arms (52, 54) are sufficiently spaced apart to receive a coiled shackle (22) therebetween, said first elongated arm (52) being adapted to receive and carry the coiled shackle (22) on said upper surface thereof, said second elongated arm (54) being capable of flexing toward and away from said first elongated arm (52) correspondingly to press and secure the coiled shackle (22) against said upper surface of said first elongated arm (52) and to increase the height of the space between said elongated arms (52, 54) for facilitating insertion and removal of the coiled shackle (22).

4. The carrier accessory (20) of claim 1 being further characterized by:
means (70) for releasably clamping said second elongated arm (54) toward said first elongated arm (52) to secure the coiled shackle (22) to said upper surface of said first elongated arm (52).

5. The carrier accessory (20) of claim 4 wherein said means (70) for releasably clamping said second elongated arm (54) toward said first elongated arm (52) is a locking lid hingedly connected to an outer end of one of said elongated arms (52, 54) and being releasably latchable to the outer end of the other of said elongated arms (52, 54), said lid (70) being swingably movable between a closed position in which said lid (70) is latched to said outer end of said other elongated arm (52, 54) and blocks entry and exit to and from the space between said elongated arms (52, 54) and an opened position in which said lid (70) is unlatched from said outer end of said other elongated arm (52, 54) and unblocks entry and exit to and from the space between said elongated arms (52, 54).

6. The carrier accessory (20) of claim 5 wherein said lid (70) latches with said outer end of said other elongated arm (52, 54) is by means of a finger (80) on one of said lid (70) and said other elongated arm (52, 54) which engages a shoulder (62) on the other of said lid (70) and said other elongated arm (52, 54).

7. The carrier accessory (20) of claim 6 wherein said lid (70) and said one elongated arm (52, 54) have cooperative means (59, 81) adapted to retain said lid (70) in a stable position when said lid (70) is opened an amount sufficient to allow a coiled shackle (22) to be placed between or removed from between said elongated arms (52, 54).

8. The carrier accessory (20) of claim 7 wherein said cooperative means (59, 81) includes a node (59) defined on said outer end of said one elongated arm (52, 54) and a recess (81) defined in said lid (70) at a position to receive said node (59) therein and thereby retain said lid (70) when said lid (70) is opened the amount sufficient to allow the coiled shackle (22) to be placed between or removed from between said elongated arms (52, 54).

9. The carrier accessory (20) of claim 1 being further characterized by:
means on one of said elongated arms (52, 54) for blocking inadvertent removal of a coiled shackle (22) from between said elongated arms (52, 54).

10. The carrier accessory (20) of claim 9 wherein said means for blocking inadvertent removal of a coiled shackle (22) is a projection (82) formed on an outer end of said first elongated arm (52) and extending upwardly for a distance sufficient to substantially block inadvertent removal of the coiled shackle (22) from said first elongated arm (52).

## Patentansprüche

1. Träger-Zubehörteil (20) zum Befestigen einer aufgewickelten Kette (22) an einem Fahrrad (11) mit Mitteln (30) zum Befestigen des Träger-Zubehörteils (20) am Fahrrad (11) und einer Vorrichtung zum Tragen einer aufgewickelten Kette (22), wobei die Tragevorrichtung mit der Befestigungsvorrichtung (30) verbunden ist und von dieser getragen wird, wobei das Träger-Zubehörteil (20) gekennzeichnet ist durch:
einen ersten langgestreckten Arm (52) mit einer oberen Oberfläche, die so ausgebildet ist, daß sie die aufgewickelte Kette (22) aufnimmt und trägt, und
Mitteln zum lösbaren Befestigen der aufgewickelten Kette (22) an der oberen Oberfläche des ersten langgestreckten Arms (52), wobei die Befestigungsmittel mit der Befestigungsvorrichtung (30) verbunden und von dieser getragen sind und einen zweiten langgestreckten Arm (54) einschließen, der sich im wesentlichen längs des ersten langgestreckten Arms (52), aber von diesem beabstandet, erstreckt, um mit diesem eine Klammer (50) zu bilden, die so ausgebildet ist, daß sie die aufgewickelte Kette (22) zwischen dem ersten und zweiten langgestreckten Arm (52, 54) aufnimmt und festhält.

2. Träger-Zubehörteil (20) nach Anspruch 1, wobei die Befestigungsvorrichtung (30) eine Schelle ist, die Klammer (50) sich von der Schelle (30) in abgewinkelter Form nach außen erstreckt und die Klammer (50) und die Schelle (30) einen integral zusammenhängenden, einstückigen Aufbau bilden.

3. Träger-Zubehörteil (20) nach Anspruch 1, wobei der erste und zweite langgestreckte Arm (52, 54) hinreichend voneinander beabstandet sind, um eine aufgewickelte Kette (22) dazwischen aufzunehmen, wobei der erste langgestreckte Arm (52) so ausgebildet ist, daß er auf seiner oberen Oberfläche die aufgewickelte Kette (22) aufnimmt und trägt, der zweite langgestreckte Arm (54) zu einem Biegen zum ersten langgestreckten Arm (52) hin und von diesem weg in der Lage ist, um entsprechend die aufgewickelte Kette (22) gegen die obere Oberfläche des ersten langgestreckten Arms (52) zu drücken und dort festzuhalten und die Höhe des Zwischenraums zwischen den langgestreckten Armen (52, 54) zum Ermöglichen des Einsetzens und Entnehmens der aufgewickelten Kette (22) zu vergrößern.

4. Träger-Zubehörteil (20) nach Anspruch 1, weiter gekennzeichnet durch:
eine Vorrichtung (70) zum lösbaren Festklemmen des zweiten langgestreckten Arms (54) gegenüber dem ersten langgestreckten Arm (52) zum Festlegen der aufgewickelten Kette (22) auf der oberen Oberfläche des ersten langgestreckten Arms (52).

5. Träger-Zubehörteil (20) nach Anspruch 4, wobei die Vorrichtung (70) zum lösbaren Festklemmen des zweiten langgestreckten Arms (54) gegenüber dem ersten langgestreckten Arm (52) eine Verriegelungsklappe ist, die scharnierartig mit einem äußeren Ende eines der langgestreckten Arme (52, 54) verbunden und lösbar mit dem äußeren Ende des anderen der langgestreckten Arme (52, 54) verriegelbar ist, wobei die Klappe (70) zwischen einer Geschlossen-Position, in der die Klappe (70) mit dem äußeren Ende des anderen langgestreckten Arms (52, 54) verriegelt ist und den Eingang in sowie den Ausgang aus dem Raum zwischen den langgestreckten Armen (52, 54) blockiert, und einer Offen-Position, in der die Klappe (70) vom äußeren Ende des anderen langgestreckten Arms (52, 54) entriegelt und der Eingang in und der Ausgang aus dem Raum zwischen den langgestreckten Armen (52, 54) nicht blockiert ist, schwenkend bewegbar ist.

6. Träger-Zubehörteil (20) nach Anspruch 5, wobei die Klappe (70) mit dem äußeren Ende des anderen langgestreckten Arms (52, 54) mittels eines Fingers (80) entweder an der Klappe (70) oder dem anderen langgestreckten Arm (52, 54) verriegelt wird, der mit einer Schulter (62) auf dem anderen der Teile-Klappe (70) und anderer langgestreckter Arm (52, 54) in Eingriff steht.

7. Träger-Zubehörteil (20) nach Anspruch 6, wobei die Klappe (70) und der eine langgestreckte Arm (52, 54) zusammenwirkende Mittel (59, 81) haben, die so ausgebildet sind, daß sie die Klappe (70) in einer stabilen Position halten, wenn die Klappe (70) um einen hinreichenden Betrag geöffnet ist, um es einer aufgewickelten Kette (22) zu gestatten, zwischen den langgestreckten Armen (52, 54) angeordnet oder aus diesen entnommen zu werden.

8. Träger-Zubehörteil (20) nach Anspruch 7, wobei die zusammenwirkenden Mittel (59, 81) eine Nase (59), die am äußeren Ende des einen langgestreckten Arms (52, 54) bestimmt ist, und eine Ausnehmung (81) einschließen, die in der Klappe (70) in einer Position bestimmt ist, daß sie die Nase (59) darin aufnimmt und damit die Klappe (70) hält, wenn die Klappe (70) um den hinreichenden Betrag geöffnet ist, um die aufgewickelte Kette (22) zwischen die langgestreckten Arme (52, 54) zu plazieren oder aus diesen zu entnehmen.

9. Träger-Zubehörteil (20) nach Anspruch 1, weiter gekennzeichnet durch:
eine Vorrichtung an einem der langgestreckten Arme (52, 54) zum Blockieren einer unbeabsichtigten Entfernung einer aufgewickelten Kette (22) zwischen den langgestreckten Armen (52, 54) heraus.

10. Träger-Zubehörteil (20) nach Anspruch 9, wobei die Vorrichtung zum Verhindern eines unbeabsichtigten Entfernens einer aufgewickelten Kette (22) ein an einem äußeren Ende des ersten langgestreckten Arms (52) gebildeter und sich um eine zum grundsätzlichen Verhindern eines unbeabsichtigten Entfernens der aufgewickelten Kette (22) vom ersten langgestreckten Arm (52) hinreichend nach oben erstreckender Fortsatz ist.

## Revendications

1. Accessoire (20) pour fixer une boucle ou un câble antivol enroulé (22) à une bicyclette (11) et comportant des moyens (30) d'attache de l'accessoire (20) à la bicyclette (11) et des moyens de support d'un câble enroulé (22), lesdits moyens de support étant reliés aux dits moyens d'attache (30) et portés par ceux-ci, l'accessoire (20) étant caractérisé par :
un premier bras allongé (52) ayant une surface supérieure prévue pour recevoir et supporter le câble enroulé (22) ; et
des moyens de fixation libérable du câble enroulé (22) à ladite surface supérieure dudit premier bras allongé (52), lesdits moyens de fixation étant reliés aux dits moyens d'attache (30) et portés par ces derniers et comprenant un deuxième bras allongé (54) qui s'étend sensiblement le long mais à une certaine distance dudit premier bras allongé (52) de façon à définir avec celui-ci une pince (50) qui peut recevoir et retenir le câble enroulé (22) entre lesdits premier et deuxième bras allongés (52,54).

2. Accessoire (20) suivant la revendication 1, dans lequel lesdits moyens d'attache (30) comprennent un collier, ladite pince (50) s'étendant vers l'extérieur en porte-à-faux à partir dudit collier (30), ladite pince (50) et ledit collier (30) constituant une structure solidaire monobloc.

3. Accessoire (20) suivant la revendication 1, dans lequel lesdits premier et deuxième bras allongés (52, 54) sont suffisamment espacés l'un de l'autre pour recevoir entre eux un câble enroulé (22), ledit premier bras allongé (52) étant prévu pour recevoir et porter le câble enroulé (22) sur sadite surface supérieure, ledit deuxième bras allongé (54) pouvant fléchir de manière à se rapprocher et s'éloigner dudit premier bras allongé (52) respectivement pour presser et pour bloquer le câble enroulé (22) contre ladite surface supérieure dudit premier bras allongé (52), et pour augmenter la hauteur de l'espace entre lesdits bras allongés (52,54) afin de faciliter l'insertion et l'enlèvement du câble enroulé (22).

4. Accessoire (20) suivant la revendication 1, caractérisé en outre par :
des moyens (70) pour presser de façon libérable ledit deuxième bras allongé (54) vers ledit premier bras allongé (52), afin de fixer le câble enroulé (22) à la dite surface supérieure dudit premier bras allongé (52).

5. Accessoire (20) suivant la revendication 4, dans lequel lesdits moyens (70) pour presser de façon libérable ledit deuxième bras allongé (54) vers ledit premier bras allongé (52) comprennent un couvercle de verrouillage relié de façon pivotante à une extrémité extérieure d'un desdits bras allongés (52,54) et verrouillable de façon libérable à l'extrémité extérieure de l'autre desdits bras allongés (52,54), ledit couvercle (70) étant déplaçable de façon pivotante entre une position fermée, dans laquelle ledit couvercle (70) est verrouillé à ladite extrémité extérieure dudit autre bras allongé (52,54) et empêche l'entrée et la sortie dans et hors de l'espace défini entre lesdits bras allongés (52,54), et une position ouverte dans laquelle ledit couvercle (70) est déverrouillé de ladite extrémité extérieure dudit autre bras allongé (52,54) et libère l'entrée et la sortie dans et hors de l'espace défini entre lesdits bras allongés (52,54).

6. Accessoire (20) suivant la revendication 5, dans lequel le verrouillage dudit couvercle (70) avec la dite extrémité extérieure dudit autre bras allongé (52, 54) s'effectue au moyen d'un doigt (80) prévu sur l'un dudit couvercle (70) et dudit autre bras allongé (52,54), qui vient en prise avec un épaulement (62) prévu sur l'autre dudit couvercle (70) et dudit autre bras allongé (52, 54).

7. Accessoire (20) suivant la revendication 6, dans lequel ledit couvercle (70) et ledit premier bras allongé (52,54) comportent des moyens coopérants (59,81) aptes à retenir ledit couvercle (70) dans une position stable lorsque ledit couvercle (70) est ouvert d'une quantité suffisante pour permettre de placer un câble enroulé (22) entre lesdits bras allongés (52,54) ou de l'en retirer.

8. Accessoire (20) suivant la revendication 7, dans lequel lesdits moyens coopérants (59,81) comprennent un bossage (59) défini sur ladite extrémité extérieure dudit premier bras allongé (52,54) et un évidement (81) défini dans ledit couvercle (70) à une position telle qu'il peut recevoir ledit bossage (59) et retenir ainsi ledit couvercle (70) lorsque ledit couvercle (70) est ouvert de la quantité suffisante pour permettre de placer le câble enroulé (22) entre lesdits bras allongés (52,54) ou de l'en retirer.

9. Accessoire (20) suivant la revendication 1, caractérisé en outre par :
des moyens prévus sur un premier desdits bras allongés (52,54) pour empêcher l'enlèvement accidentel d'un câble enroulé (22) d'entre lesdits bras allongés (52, 54).

10. Accessoire (20) suivant la revendication 9, dans lequel lesdits moyens pour empêcher l'enlèvement accidentel d'un câble enroulé (22) comprennent une saillie (82) formée sur une extrémité extérieure dudit premier bras allongé (52) et s'étendant vers le haut sur une distance suffisante pour empêcher sensiblement la sortie accidentelle du câble enroulé (22) dudit premier bras allongé (52).
